Europäisches Patentamt

European Patent Office

Office européen des brevets

(11) Publication number: **0 294 999**
**A2**

## EUROPEAN PATENT APPLICATION

(21) Application number: 88304997.5

(22) Date of filing: 01.06.88

(51) Int. Cl.4: **H02G 15/18**

(30) Priority: 11.06.87 GB 8713673

(43) Date of publication of application:
14.12.88 Bulletin 88/50

(84) Designated Contracting States:
BE DE ES FR IT NL

(71) Applicant: **BOWTHORPE-HELLERMANN LIMITED**
**Gatwick Road**
**Crawley West Sussex RH10 2RZ(GB)**

(72) Inventor: **Foss, Raymond Charles**
**152, Peverell Park Road,**
**Peverell, Plymouth(GB)**

(74) Representative: **Gibson, Stewart Harry et al**
**URQUHART-DYKES & LORD Business**
**Technology Centre Senghennydd Road**
**Cardiff CF2 4AY South Wales(GB)**

(54) Cable jointing.

(57) In jointing cables, a longitudinally-split sleeve of metal mesh is wrapped around the spliced cables. Because the metal mesh is flexible and will distort easily when longitudinally split, it can be wrapped tightly around the cable joint from end-to-end. The sleeve may comprise a tubular sleeve woven from metal wire, which then has a line 10 of e.g. soft solder or adhesive applied to it before it is longitudinally split by cutting down the centre of this line of material, which material prevents the cut edges of the metal mesh from fraying. After the metal mesh sleeve is wrapped into position, a heat-shrink sleeve is applied and recovered about the cable joint.

FIG.1.

EP 0 294 999 A2

# CABLE JOINTING

This invention relates to cable jointing, and particularly but not solely jointing telecommunications cables.

In jointing or splicing telecommunications cables, it is known to place a tubular protecting sleeve around the spliced cables, which sleeve is formed of flexible, galvanised steel mesh, and then to place a heat-shrinkable sleeve around the mesh sleeve.

We have now devised an improved jointing procedure and jointing kit which utilises an improved form of protecting sleeve.

In accordance with this invention, there is provided a method of jointing cables, which method includes wrapping a longitudinally-split sleeve of metal mesh around the spliced cables.

This longitudinally split sleeve may be wrapped tightly about the cable joint from end-to-end of the sleeve. The end portions of the sleeve may be wrapped tightly around the cable sheaths at the opposite ends of the joint, and then are preferably taped in position. Thereafter, a heat-shrinkable sleeve may be placed around the metal mesh protecting sleeve, and heat applied to recover the heat-shrinkable sleeve.

A single size of longitudinally-split metal mesh sleeve may be used for a range of joint sizes and yet the sleeve wrapped tightly about the underlying joint. Because the sleeve is flexible and distorts easily it can be wrapped to conform to the varying profile and diameter of the joint along the length of the sleeve. The heat-shrinkable sleeve which is applied after this protecting sleeve may comprise a length of heat-shrink tubing or it may comprise a wrap-around (i.e. longitudinally-split heat-shrink sleeve.

Also in accordance with this invention there is provided a cable jointing kit, which comprises a longitudinally split sleeve or metal mesh for wrapping around spliced cables. Further in accordance with this invention, there is provided a method of forming a protective sleeve for wrapping around a cable joint, comprising forming a tubular metal mesh sleeve, then longitudinally splitting the sleeve by cutting it from end-to-end.

The jointing method and jointing kit may be used on in-line cable joints or on branch joints.

An embodiment of this invention will now be described by way of example only and with reference to the accompanying drawings, in which:

FIGURE 1 is a side view of a split metal mesh sleeve;

FIGURE 2 is a side view of a cable joint showing the split metal mesh sleeve being placed centrally with respect to the joint and prior to being wrapped tightly around the joint; and

FIGURE 3 shows the joint after a heat-shrink sleeve has been placed about it and recovered.

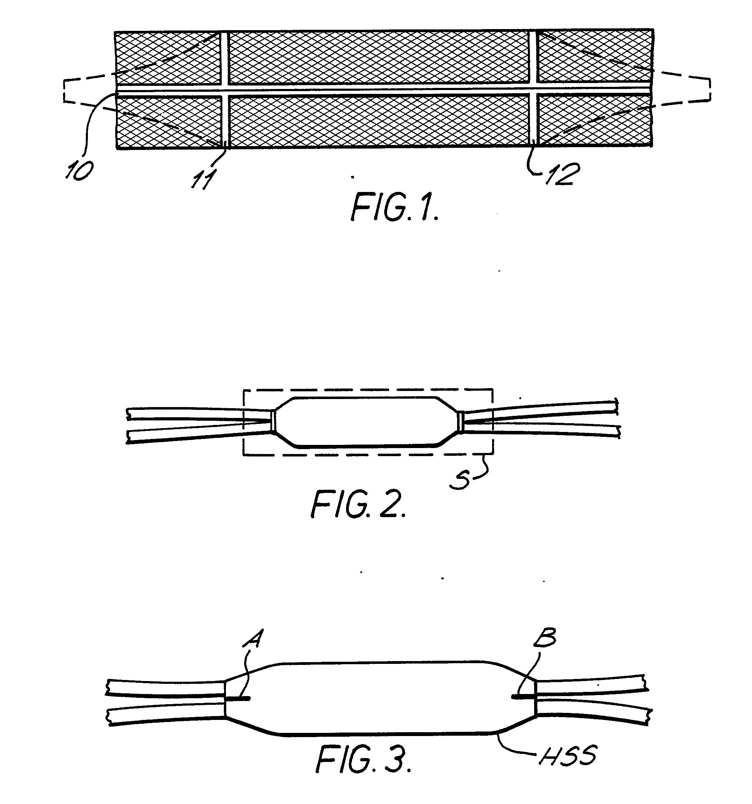

Referring to Figure 1, a longitudinally split metal mesh sleeve for use in accordance with the invention may be formed from a tubular sleeve woven from wire (e.g. galvanised steel wire). A line 10 of material (e.g. soft solder or an adhesive) is applied to the sleeve longitudinally and two circumferential lines 11,12 of the same material are applied at an appropriate distance from each end of the sleeve. The sleeve is then split longitudinally by cutting down the centre of the line 10, the e.g. soft solder serving to prevent the cut edges of the sleeve from fraying. The end portions of the split sleeve can be stretched outwardly, as shown by the dotted lines, with the effect of causing them to taper and thus (in use) to embrace the cable sheaths at the appropriate ends of the joint.

In forming a joint, the insulation is cut from the appropriate end lengths of the cables and the splices made according to conventional techniques. Then dessicant packs are placed in the splice bundle and tied in position. If any end of the joint has more than one cable emerging, the cables at that end are taped together. A moisture barrier plastics/aluminium laminate foil is then placed centrally around the joint so as to overlap the cable sheaths at the opposite ends of the joint by about 25mm, and this foil is then wrapped tightly to enclose the joint; its ends are secured in place using PVC adhesive tape.

Next as shown in Figure 2, the metal mesh protecting sleeve S of Figure 1 is placed centrally around the joint and wrapped tightly. Because the metal mesh is flexible and distorts easily, it can be wrapped to conform to the varying profile and diameter of the joint along the length of the sleeve. The ends of the sleeve are stretched out as mentioned previously and wrapped around the cable sheaths at the opposite ends of the joint, then secured in place using PVC adhesive tape. Then the metal protecting sleeve is over-wrapped completely with PVC adhesive tape, so that it will be possible at a later date to remove that heat-shrink sleeve (which will be applied in the next step) and gain re-entry to the joint should this become necessary.

In the above-mentioned next step, and as shown in Figure 3, a heat-shrink sleeve HSS is applied and this may comprise a wrap-around sleeve which must have its longitudinal edges clipped or otherwise secured together after wrapping about the joint and prior to applying heat to cause recovery. If either end has e.g. two cables emerging from the joint then a Hellermann branch sealing tool is applied to the end of the heat-shrinkable sleeve between the two cables (positions A,B) immediately after recovery. The tool is removed after sufficient cooling has taken place. The tool will have caused the sleeve to seal around the two cables and the two opposing portions of the sleeve to adhere permanently together. However, for additional security clips may be applied after the sleeve has cooled.

## Claims

**1.** A method of jointing cables **characterised by** the step of wrapping a longitudinally-split sleeve of metal mesh around the spliced cables.

**2.** A method as claimed in claim 1, **characterised by** the steps of placing a heat-shrinkable sleeve around the metal mesh sleeve, and of applying heat to recover the heat-shrinkable sleeve.

**3.** A method as claimed in claim 1 or 2, **characterised by** the step of stretching end portions of the metal mesh sleeve outwardly in order to cause them to taper, before wrapping the metal-mesh sleeve around the spliced cables.

**4.** A cable jointing kit, **characterised by** a longitudinally-split sleeve of metal mesh for wrapping around spliced cables.

**5.** A cable jointing kit as claimed in claim 4, **characterised in that** the longitudinal edges of the metal mesh sleeve have material (10) applied to each of them to prevent them from fraying.

**6.** A cable jointing kit as claimed in claim 4 or 5, **characterised in that** the metal mesh sleeve comprises a tubular sleeve woven from wire and then longitudinally split.

**7.** A cable jointing kit as claimed in claim 4, 5 or 6, **characterised in that** a heat-shrinkable sleeve is provided for applying around the metal mesh sleeve after this has been wrapped around the spliced cables.

**8.** A method of forming a protective sleeve for wrapping around a cable joint, **characterised by** the step of forming a tubular metal mesh sleeve, then longitudinally splitting the sleeve by cutting it from end-to-end.

**9.** A method as claimed in claim 8, **characterised in that** the tubular metal mesh sleeve is formed by weaving from wire.

**10.** A method as claimed in claim 8 or 9, **characterised in that** a longitudinal line (10) of material is applied to the tubular metal mesh sleeve before it is longitudinally split, and then the sleeve is cut from end-to-end down the centre of said line of material, said material serving to prevent the cut edges of the sleeve from fraying.

**11.** A method as claimed in claim 10, **characterised in that** a circumferential line (e.g. 11,12) of said material is also applied to the tubular metal mesh sleeve at a distance from each of its ends.

FIG.1.

FIG. 2.

FIG. 3.